# NEUE EUROPÄISCHE PATENTSCHRIFT

(11) **EP 2 650 194 B2**
(45) Veröffentlichungstag und Bekanntmachung des Hinweises auf die Entscheidung über den Einspruch: **01.03.2023**
(45) Hinweis auf die Patenterteilung: 24.10.2018
(21) Anmeldenummer: 13001823.7
(22) Anmeldetag: 09.04.2013
(51) Int. Cl.: B62D 33/00, B62D 21/18, B62D 25/10

(54) **Chassis für eine Straßenbaumaschine**
Chassis for a road construction machine
Châssis pour un engin routier

(30) Priorität: 13.04.2012 DE 202012003756 U
(43) Veröffentlichungstag der Anmeldung: 16.10.2013
(73) Patentinhaber: Joseph Vögele AG, 67067 Ludwigshafen (DE)
(72) Erfinder: Schmidt, Thomas, 68723 Plankstadt (DE); Gotterbarm, Tobias, 67117 Limburgerhof (DE)
(74) Vertreter: Grünecker Patent- und Rechtsanwälte PartG mbB

(56) Entgegenhaltungen:
- EP-A1- 1 174 545
- EP-A1- 2 384 954
- EP-A2- 0 501 276
- JP-A- S 628 181
- US-A- 3 969 947
- US-A- 4 174 642
- US-A- 5 350 339
- US-A- 5 495 910
- US-A- 5 660 244
- US-A1- 2003 075 370
- 207652-E2.pdf (englische Übersetzung von JP S628181)

## Beschreibung

Die vorliegende Erfindung betrifft ein Chassis für eine Straßenbaumaschine mit den technischen Merkmalen des Anspruchs 1.

Herkömmlicherweise besteht ein Chassis für eine Straßenbaumaschine aus Längs- und Querholmen, die miteinander verschweißt sind, um der Straßenbaumaschine einen stabilen Aufbau zu gewährleisten. Dabei sind in der Praxis die Quer- und Längsholme durchgehend gerade ausgebildet.

Bekannt ist auch, dass entlang der Außenseiten der Quer- und Längsholme Seitenverkleidungen am Chassis befestigt sind. Die Seitenverkleidungen sind mit geeigneten Schraub- bzw. Schweißverbindungen auf den Längs- oder Querholmen des Chassis befestigt.

Insbesondere im Bereich des Antriebs bilden die auf dem Chassis angebrachten Verkleidungen eine Motorhaube. Bekannt ist, dass die Motorhaube aus seitlichen Verkleidungen besteht, welche fest entlang durchgehender Längsholme befestigt sind. Problematisch ist bei bekannten Motorhauben, dass ein darin eingeschlossener Antrieb nur schwer zugänglich ist, wodurch insbesondere Instandsetzungsarbeiten schwer durchführbar sind.

Außerdem nehmen die Verkleidungskonstruktionen, die außen auf den durchgehenden Längs- und Querholmen des Chassis angebracht sind viel Platz in Anspruch.

EP 0 501 276 A2 offenbart einen Traktor mit einem als Chassis ausgebildeten Fahrzeuggrundrahmen, auf dem ein zusammengeschraubter kastenförmiger Rahmen zur Anbringung von Abdeckteilen vibrationsentkoppelt montiert ist.

Folglich liegt der Erfindung die Aufgabe zugrunde, ein Chassis für eine Straßenbaumaschine mittels einfacher, konstruktiver technischer Merkmale dahingehend zu verbessern, dass es eine bessere Zugänglichkeit eines Motorraums ermöglicht. Darüber hinaus wird angestrebt, dass das Chassis der Erfindung eine verringerte Baugröße der Straßenbaumaschine ermöglicht.

Diese Aufgabe wird gelöst durch die technischen Merkmale des Anspruchs 1. Vorteilhafte Weiterbildungen der Erfindung lassen sich durch die technischen Merkmale der Unteransprüche erzielen.

Die vorliegende Erfindung bezieht sich auf ein Chassis für eine Straßenbaumaschine, umfassend mindestens einen ersten Längsholm, der zumindest abschnittsweise seitlich entlang eines Motorraums der Straßenbaumaschine verläuft. Erfindungsgemäß umfasst der Längsholm eine Stufe, die den Längsholm in einen äußeren Längsholmabschnitt und in einen inneren Längsholmabschnitt unterteilt, wobei der innere Längsholmabschnitt durch die Stufe einen Aufnahmebereich ausbildet, in dem ein erstes Verkleidungselement aufgenommen ist.

Das erfindungsgemäße Chassis kann ein oder mehrere Verkleidungselemente an sich koppeln. Dazu eignet sich besonders gut der durch die Stufe geschaffene Aufnahmebereich, in dem sich ein Verkleidungselement gut anbringen lässt, ohne dabei zusätzliche Befestigungsvorrichtungen zu verwenden, wie es bisher üblich war.

Außerdem schafft das erfindungsgemäße Chassis eine verbesserte Zugänglichkeit zu einem Motorraum, wobei der Motorraum insbesondere über den Aufnahmebereich gut erreichbar ist.

Durch die Erfindung kann eine Verkleidung im Aufbau des Chassis integriert werden. Ebenso ist es durch die Erfindung möglich, auf gewichtige Befestigungsvorrichtungen zu verzichten, weil sich Verkleidungselemente direkt am Chassis befestigen lassen.

Ferner wird durch eine Minimierung der Befestigungsvorrichtungen für die Verkleidungen ein vergrößerter Einbauraum für die Straßenbaumaschine geschaffen.

Obwohl das erfindungsgemäße Chassis einen insgesamt kompakteren Aufbau einer Straßenbaumaschine ermöglicht, bietet es einen sehr stabilen Aufbau, sodass es für sämtliche Straßenbaumaschinentypen gut einsetzbar ist.

Erfindungsgemäß ist eine Außenseite des inneren Längsholmabschnitts durch die Stufe relativ zu einer Außenseite des äußeren Längsholmabschnitts hin zum Motorraum der Straßenbaumaschine versetzt. Dadurch ist es möglich, das erste Verkleidungselement auf platzsparende Art sowie auf ästhetische Weise auf der Außenseite des inneren Längsholmabschnitts zu befestigen.

Gemäß einer weiteren Ausführungsform der Erfindung umfasst die Stufe einen schrägen Absatz zwischen dem äußeren und dem inneren Längsholmabschnitt. Dadurch ist es möglich, im Bereich der Stufe Spannungen zu vermeiden, die sich negativ auf die Festigkeit des Chassis auswirken. Vielmehr ermöglicht der schräge Absatz, dass sich Spannungen gleichmäßig über den inneren und äußeren Längsholmabschnitt verteilen lassen.

Eine äußerst stabile Konstruktion des Chassis liegt vor allem dann vor, wenn die Stufe einteilig mit dem äußeren und dem inneren Längsholmabschnitt ausgebildet ist. Eine einteilige Ausbildung der Stufe mit dem inneren und dem äußeren Längsholmabschnitt kann beispielsweise durch einen Biegeprozess hergestellt werden.

Alternativ sind der äußere und der innere Längsholmabschnitt vorzugsweise mittels eines Überlappungsstoßes miteinander verschweißt, um die Stufe auszubilden. Dadurch kann die Stufe auf besonders einfache Art und Weise sowie kostengünstig hergestellt werden.

Vorteilhaft ist es auch, wenn das erste Verkleidungselement lösbar am Chassis befestigt ist. Dadurch ist es möglich, das erste Verkleidungselement problemlos vom Chassis abzunehmen, um beispielsweise in den Motorraum zu gelangen.

Gemäß einer weiteren Ausführungsform der Erfindung ist vorgesehen, dass das erste Verkleidungselement direkt am Chassis verschraubbar ist. Mittels einer Schraubenverbindung lässt sich das erste Verkleidungselement besonders sicher und schnell am Chassis befestigen sowie von diesem entfernen. Außerdem ermöglicht eine Schraubenverbindung, dass das erste Verkleidungselement wiederholt vom Chassis abgenommen bzw. am Chassis angebracht werden kann.

Vorzugsweise ist das erste Verkleidungselement im Aufnahmebereich des inneren Längsholmabschnitts relativ zum äußeren Längsholmabschnitt bündig aufnehmbar. Dadurch kann das erste Verkleidungselement besonders ästhetisch im Chassis der Straßenbaumaschine integriert werden. Schließlich lässt sich dadurch das erste Verkleidungselement besonders stabil am Chassis befestigen. Ebenfalls ermöglicht eine solche in das Chassis hineinversetzte Anbringung des ersten Verkleidungselements, dass dieses sicher, ohne bemerkenswerte Abnutzung am Chassis befestigt ist.

Um für eine ausreichende Kühlung eines im Motorraum befindlichen Antriebs zu sorgen, ist vorzugsweise vorgesehen, dass das erste Verkleidungselement mindestens eine Lüftungsöffnung aufweist. Vorzugsweise handelt es sich dabei um übereinander angeordnete länglich ausgebildete Lüftungsöffnungen. Durch diese ist ein besonders effektiver Transport der Abwärme des Antriebs sowie eine effektive Luftansaugung des Kühlers möglich.

Gemäß einer weiteren Ausführungsform ist vorgesehen, dass das erste Verkleidungselement eine Verkleidungstür ist. Durch die Verkleidungstür ist der Motorraum besonders gut zugänglich, um beispielsweise Wartungsarbeiten am Antrieb vorzunehmen. Dadurch ist es problemlos möglich von der Seite der Straßenbaumaschine in den Motorraum durch die Verkleidungstür vorzudringen.

Um die Verkleidungstür wiederholt auf einfache Art und Weise relativ zum Chassis öffnen und schließen zu können, ist die Verkleidungstür gemäß einer vorteilhaften Ausführung schwenkbar am Chassis befestigt. Dadurch bietet die Verkleidungstür Zugang zum Motorraum, ohne dass sie vom Chassis entfernt werden muss.

Vorzugsweise ist die Verkleidungstür vorgespannt gegen den inneren Längsholmabschnitt, insbesondere gegen eine nach außen gerichtete Seite des inneren Längsholmabschnitts, haltbar. Dadurch ist es möglich, die Verkleidungstür stabil gegen das Chassis zu halten, wobei es zu keiner unerwünschten Geräuschentwicklung durch die Verkleidungstür kommt.

Vorteilhaft ist es auch, wenn die Verkleidungstür durch eine Gasfeder zwischen einer geöffneten und einer geschlossenen Stellung bewegbar ist. Durch die Gasfeder kann die Verkleidungstür auch besonders stabil in der geöffneten und in der geschlossenen Stellung gehalten werden.

Um zu verhindern, dass sich die Verkleidungstür ungewollt aus einer am Chassis anliegenden Position, in eine offene Position bewegt, kann vorgesehen sein, dass die Verkleidungstür am Chassis verriegelbar ist.

Um einen weiteren Abschnitt des Motorraums nach außen zu schützen, ist gemäß einer weiteren Ausführungsform der Erfindung am äußeren Längsholmabschnitt ein zweites Verkleidungselement befestigt.

Im Bereich des zweiten Verkleidungselements ist der Motorraum besonders einfach zugänglich, wenn dieses lösbar am äußeren Längsholmabschnitt befestigt ist. Vorzugsweise lässt sich das zweite Verkleidungselement aus einer geschlossenen in eine offene Position schwenken, um Zugang zum Motorraum zu verschaffen, ohne es dabei vom Chassis zu entfernen.

Die Erfindung betrifft auch eine Straßenbaumaschine mit einem Chassis der zuvor beschriebenen Art. Insbesondere handelt es sich bei der Straßenbaumaschine um einen Straßenfertiger oder ein Beschickerfahrzeug. Insbesondere bei Straßenbau- sowie Beschickerfahrzeugen hat sich das erfindungsgemäße Chassis als vorteilhaft herausgestellt, um einem Bediener, beispielsweise für Wartungsarbeiten, einen verbesserten Zugang zum Motorraum zu verschaffen. Außerdem konnte es bei den Straßenfertigern bzw. Beschickerfahrzeugen mit dem erfindungsgemäßen Chassis zu einer reduzierten Anzahl an verbauten Komponenten kommen. Infolgedessen hat sich herausgestellt, dass sich die Herstellungskosten sowie der Montageaufwand reduzieren lassen.

Der Gegenstand der Erfindung wird anhand der nachfolgend erläuterten Figuren genauer beschrieben. Dabei zeigen die
- Figur 1: eine Seitenansicht einer Straßenbaumaschine mit dem erfindungsgemäßen Chassis und einer daran befestigten geöffneten Verkleidungstür,
- Figur 2: eine Seitenansicht einer Straßenbaumaschine mit dem erfindungsgemäßen Chassis und einer daran befestigten geschlossenen Verkleidungstür,
- Figur 3: eine Draufsicht des erfindungsgemäßen Chassis mit einer geöffneten Ver-kleidungstür, und
- Figur 4: eine Draufsicht des erfindungsgemäßen Chassis mit einer geschlossenen Verkleidungstür.

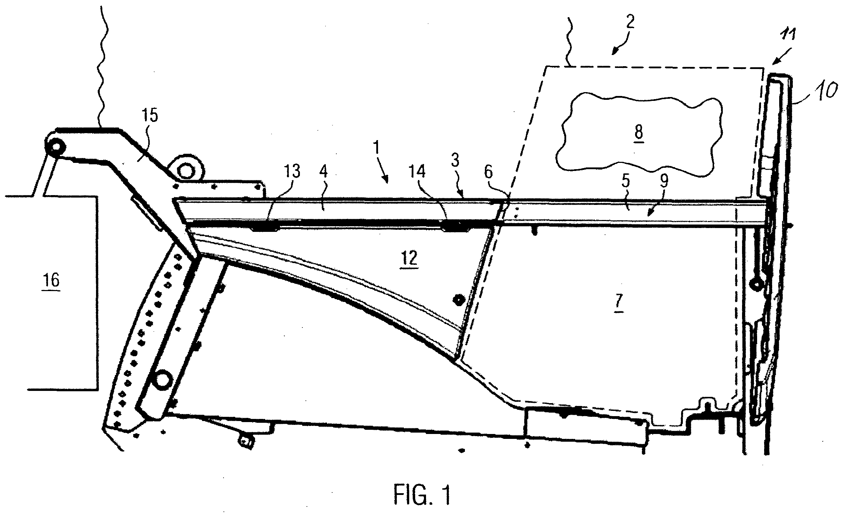

Die Figur 1 zeigt eine Seitenansicht des erfindungsgemäßen Chassis 1, das an einer Straßenbaumaschine 2 angeordnet ist. Das erfindungsgemäße Chassis 1 umfasst einen Längsholm 3, der im Wesentlichen horizontal gelagert ist.

Der Längsholm 3 umfasst einen äußeren Längsholmabschnitt 4 sowie einen inneren Längsholmabschnitt 5. Zwischen dem äußeren Längsholmabschnitt 4 und dem inneren Längsholmabschnitt 5 ist eine Stufe 6 vorgesehen. Durch die Stufe 6 ist eine nach außen gerichtete Seite des inneren Längsholmabschnitts 5 relativ zu einer nach außen gerichteten Seite des äußeren Längsholmabschnitts 4 nach innen in einen Motorraum 7 der Straßenbaumaschine 2 versetzt. Im Motorraum 7 der Straßenbaumaschine 2 ist ein Antrieb 8 angeordnet.

Der Längsholm 3 bildet entlang des inneren Längsholmabschnitts 5 einen Aufnahmebereich 9 aus. Im Aufnahmebereich 9 kann eine Verkleidungstür 10 aufgenommen werden. In der Figur 1 ist die Verkleidungstür 10 in einer offenen Stellung, in der sie direkten Zugang zum im Motorraum 7 angeordneten Antrieb 8 verschafft. Ebenfalls ist in der Figur 1 die Verkleidungstür 10 gestrichelt dargestellt, wenn sie in einer geschlossenen Stellung relativ zum Chassis 1 angeordnet ist. Dabei ist die Verkleidungstür 10 im Aufnahmebereich 9 des Chassis 1 angeordnet.

Gemäß der Figur 1 ist die Verkleidungstür 10 als ein erstes Verkleidungselement 11 am Chassis 1 befestigt. Außerdem zeigt die Figur 1 ein zweites Verkleidungselement 12, das am äußeren Längsholmabschnitt 4 des Längsholms 3 befestigt ist. Das zweite Verkleidungselement 12 ist durch ein erstes Lager 13 und ein zweites Lager 14 am äußeren Längsholmabschnitt 4 befestigt. Dabei ist das zweite Verkleidungselement 12 derart am äußeren Längsholmabschnitt 4 befestigt, dass es diesen nicht überdeckt.

Die Figur 1 zeigt auch einen seitlichen Befestigungsträger 15, an dem eine Einbaubohle 16 befestigt ist.

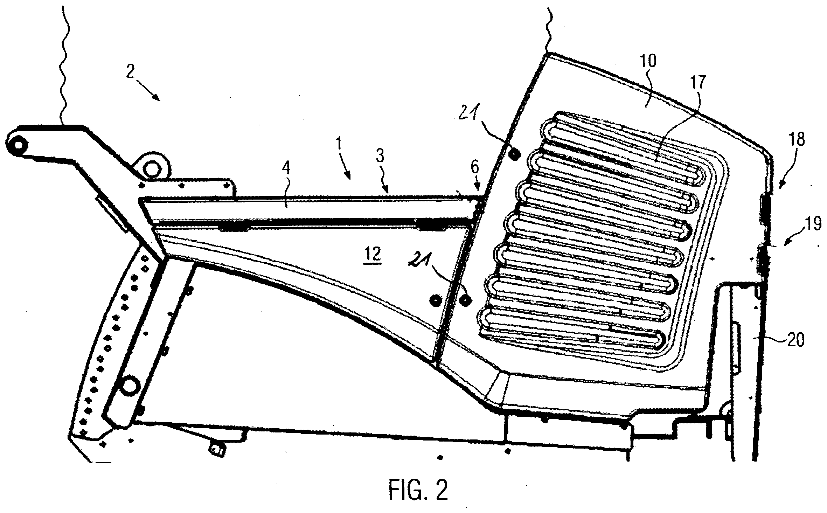

Die Figur 2 zeigt eine Seitenansicht des erfindungsgemäßen Chassis 1, das für die Straßenbaumaschine 2 verwendbar ist. Gemäß der Figur 2 befindet sich die Verkleidungstür 10 in einer geschlossenen Stellung. In der geschlossenen Stellung ist die Verkleidungstür 10 in dem durch die Stufe 6 ausgebildeten Aufnahmebereich 9 angeordnet.

Die Verkleidungstür 10 umfasst in der Figur 2 mehrere übereinander angeordnete längliche Lüftungsöffnungen 17, die dafür vorgesehen sind, eine ausreichende Kühlung des im Motorraum 7 angeordneten Antriebs 8 sicherzustellen.

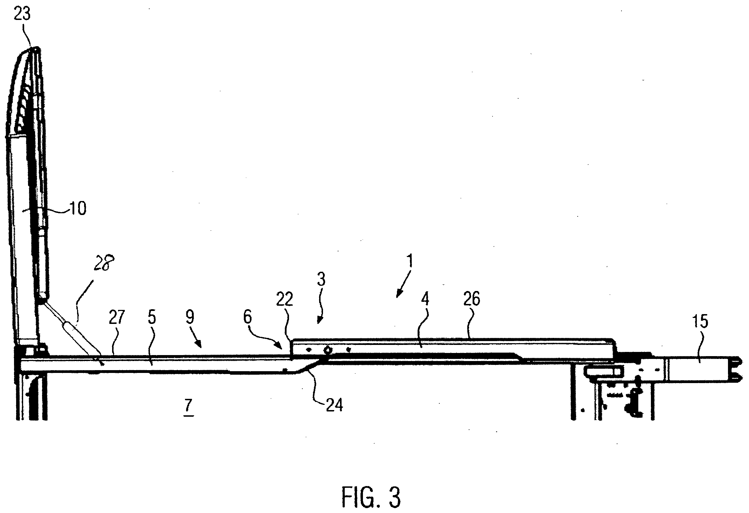

Die Verkleidungstür 10 ist durch ein drittes und ein viertes Lager 18, 19 am Chassis 1 befestigt. Bei den Lagern 18, 19 kann es sich beispielsweise jeweils um ein Scharnier handeln. Insbesondere ist die Verkleidungstür 10 durch das dritte und das vierte Lager 18, 19 an einer zum Längsholm 3 vertikal ausgerichteten Vorderwand 20 des Chassis 1 befestigt. Die Verkleidungstür 10 ist in dem Aufnahmebereich 8 gegen den inneren Längsholmabschnitt 5 des Längsholms 3 mittels einer Gasfeder 28 (siehe Figur 3) vorgespannt.

Die Figur 2 zeigt auch eine Verriegelung 21, die an der Verkleidungstür 10 vorgesehen ist. Mit der Verriegelung 21 lässt sich die Verkleidungstür 10 im Aufnahmebereich 9 verriegeln, wenn die Verkleidungstür 10 im Aufnahmebereich 9 in der geschlossenen Position ist.

In der Figur 3 ist eine Draufsicht des erfindungsgemäßen Chassis 1 zu sehen. Relativ zum Chassis 1 befindet sich die Verkleidungstür 10 in der offenen Stellung. Wenn sich die Verkleidungstür 10 in der offenen Stellung befindet, ist der Motorraum 7 von außen gut zugänglich.

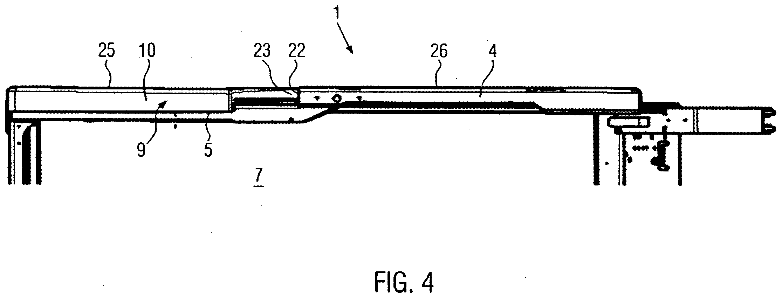

Zwischen dem inneren Längsholmlabschnitt 5 und der Verkleidungstür 10 ist eine Gasfeder 28 befestigt. Die Gasfeder 28 hält die Verkleidungstür 10 vorgespannt in der geöffneten Stellung. Ebenfalls ermöglicht es die Gasfeder 28 die Verkleidungstür 10 in vorgespannter Weise in der geschlossenen Stellung nach Figur 4 zu halten.

Die Stufe 6 umfasst einen ersten Stufenabschnitt 22, der relativ zu der Außenseite 26 des äußeren Längsholmabschnitts 4 und relativ zur nach innen versetzten Außenseite 27 des inneren Längsholmabschnitts 5 vertikal ausgerichtet ist. Der erste Stufenabschnitt 22 ist dafür vorgesehen, um eine äußere Kante 23 der Verkleidungstür 10 aufzunehmen.

Außerdem zeigt die Figur 3 einen zweiten Stufenabschnitt 24, der relativ zu einer Innenseite des äußeren Längsholmabschnitts 4 und relativ zu einer Innenseite des nach innen versetzten inneren Längsholmabschnitts 5 schräg verläuft.

In der Figur 4 ist eine Draufsicht des erfindungsgemäßen Chassis 1 zu sehen, in der sich die Verkleidungstür 10 in der geschlossenen Stellung relativ zum Chassis 1 befindet. In der geschlossenen Stellung ist die Verkleidungstür 10 im Aufnahmebereich 9 des inneren Längsholmabschnitts 5 angeordnet. Außerdem befindet sich die äußere Kante 23 der Verkleidungstür 10 im ersten Stufenabschnitt 22 der Stufe 6.

Außerdem ist in der Figur 4 dargestellt, dass eine Außenseite 25 der Verkleidungstür 10 relativ zu einer Außenseite 26 des äußeren Längsholmabschnitts 4 bündig verläuft. Dadurch ist es möglich, die Verkleidungstür 10 auf besonderes ästhetische Art und Weise am Chassis 1 der Erfindung anzuordnen.

Gemäß der Erfindung kann das erste Verkleidungselement 11, welches gemäß den Figuren 1 bis 4 als Verkleidungstür 10 dargestellt ist, im Aufbau des erfindungsgemäßen Chassis integriert werden. Die Erfindung ermöglicht es, das Chassis 1 selbst als tragende Konstruktion für Verkleidungselemente anzuwenden.

Durch die Erfindung ist es auch möglich, besonders gut Zugang zu einem Inneren des Motorraums zu erhalten, wodurch insbesondere Wartungsarbeiten erleichtert werden.

Das erfindungsgemäße Chassis kann an sämtlichen Straßenbaumaschinen zum Einsatz kommen. Außerdem ist es durchaus vorstellbar, dass das erfindungsgemäße Chassis darüber hinaus vorteilhaft an landwirtschaftlichen Maschinen sowie an Transportfahrzeugen, wie beispielsweise Lastwagen, einsetzbar ist.

## Patentansprüche

1. Chassis (1) für einen Straßenfertiger oder Beschicker, umfassend mindestens einen ersten Längsholm (3), der zumindest abschnittsweise seitlich entlang eines Motorraumes (7) des Straßenfertigers oder Beschickers verläuft, **wobei** der Längsholm (3) eine Stufe (6) aufweist, die den Längsholm (3) in einen äußeren Längsholmabschnitt (4) und in einen inneren Längsholmabschnitt (5) unterteilt, wobei der innere Längsholmabschnitt (5) durch die Stufe (6) einen Aufnahmebereich (9) ausbildet, **dadurch gekennzeichnet, dass**
in dem Aufnahmebereich (9) ein erstes Verkleidungselement (11) aufgenommen ist, und
eine Außenseite (27) des inneren Längsholmabschnitts (5) durch die Stufe (6) relativ zu einer Außenseite (26) des äußeren Längsholmabschnitts (4) zum Motorraum (7) des Straßenfertigers oder Beschickers hin versetzt ist.

2. Chassis nach Anspruch 1, **dadurch gekennzeichnet, dass** die Stufe (6) einen schrägen Stufenabschnitt (23) zwischen dem äußeren und dem inneren Längsholmabschnitt (4, 5) umfasst.

3. Chassis nach einem der vorigen Ansprüche, **dadurch gekennzeichnet, dass** die Stufe (6) einteilig mit dem äußeren und dem inneren Längsholmabschnitt (4, 5) ausgebildet ist.

4. Chassis nach einem der vorigen Ansprüche, **dadurch gekennzeichnet, dass** der äußere und der innere Längsholmabschnitt (4, 5) mittels eines Überlappungsstoßes miteinander verschweißt sind, um die Stufe (6) auszubilden.

5. Chassis nach einem der vorigen Ansprüche, **dadurch gekennzeichnet, dass** das erste Verkleidungselement (11) lösbar am Chassis (1) befestigt ist.

6. Chassis nach einem der vorigen Ansprüche, **dadurch gekennzeichnet, dass** das erste Verkleidungselement (11) direkt am Chassis (1) verschraubbar ist.

7. Chassis nach einem der vorigen Ansprüche, **dadurch gekennzeichnet, dass** das erste Verkleidungselement (11) im Aufnahmebereich (9) des inneren Längsholmabschnittes (5) relativ zum äußeren Längsholmabschnitt (4) bündig aufnehmbar ist.

8. Chassis nach einem der vorigen Ansprüche, **dadurch gekennzeichnet, dass** das erste Verkleidungselement (11) mindestens eine Lüftungsöffnung (17) aufweist.

9. Chassis nach einem der vorigen Ansprüche, **dadurch gekennzeichnet, dass** das erste Verkleidungselement (11) eine Verkleidungstür (10) ist.

10. Chassis nach Anspruch 9, **dadurch gekennzeichnet, dass** die Verkleidungstür (10) schwenkbar am Chassis (1) befestigt ist.

11. Chassis nach Anspruch 9 oder 10, **dadurch gekennzeichnet, dass** die Verkleidungstür (10) vorgespannt gegen den inneren Längsholmabschnitt (5) haltbar ist.

12. Chassis nach einem der Ansprüche 9 bis 11, **dadurch gekennzeichnet, dass** die Verkleidungstür (10) durch eine Gasfeder (28) zwischen einer geöffneten und einer geschlossenen Stellung bewegbar ist.

13. Chassis nach einem der Ansprüche 9 bis 12, **dadurch gekennzeichnet, dass** die Verkleidungstür (10) am Chassis (1) verriegelbar ist.

14. Chassis nach einem der vorigen Ansprüche, **dadurch gekennzeichnet, dass** am äußeren Längsholmabschnitt (4) ein zweites Verkleidungselement (12) befestigt ist.

15. Chassis nach Anspruch 14, **dadurch gekennzeichnet, dass** das zweite Verkleidungselement (12) lösbar am äußeren Längsholmabschnitt (4) befestigt ist.

16. Straßenfertiger oder Beschicker mit einem Chassis (1) gemäß einem der vorigen Ansprüche.

## Claims

1. Chassis (1) for a road finishing machine or a charger vehicle, comprising at least one first longitudinal beam (3) which extends at least in sections laterally along an engine compartment (7) of the road finishing machine or charger vehicle, the longitudinal beam (3) comprising a step (6) which divides the longitudinal beam (3) into an external longitudinal beam section (4) and an internal longitudinal beam section (5), the internal longitudinal beam section (5) forming a receiving area (9) by the step (6),
**characterized in that**
in the receiving area (9) a first cover element (11) is received, and
an outer side (27) of the internal longitudinal beam section (5) is offset relative to an outer side (26) of the external longitudinal beam section (4) towards the engine compartment (7) of the road finishing machine or charger vehicle by the step (6).

2. Chassis according to claim 1, **characterized in that** the step (6) comprises an oblique step section (23) between the external and the internal longitudinal beam sections (4, 5).

3. Chassis according to one of the preceding claims, **characterized in that** the step (6) is integrally formed with the external and the internal longitudinal beam sections (4, 5).

4. Chassis according to one of the preceding claims, **characterized in that** the external and the internal longitudinal beam sections (4, 5) are welded to each other by means of a lap joint to form the step (6).

5. Chassis according to one of the preceding claims, **characterized in that** the first cover element (11) is detachably fixed to the chassis (1).

6. Chassis according to one of the preceding claims, **characterized in that** the first cover element (11) can be directly screwed to the chassis (1).

7. Chassis according to one of the preceding claims, **characterized in that** the first cover element (11) can be received flush in the receiving area (9) of the internal longitudinal beam section (5) relative to the external longitudinal beam section (4).

8. Chassis according to one of the preceding claims, **characterized in that** the first cover element (11) comprises at least one vent (17).

9. Chassis according to one of the preceding claims, **characterized in that** the first cover element (11) is a cover door (10).

10. Chassis according to claim 9, **characterized in that** the cover door (10) is fixed to the chassis (1) to be pivoting.

11. Chassis according to claim 9 or 10, **characterized in that** the cover door (10) can be retained with pretension against the internal longitudinal beam section (5).

12. Chassis according to one of claims 9 to 11, **characterized in that** the cover door (10) can be moved between an opened and a closed position by a gas spring (28).

13. Chassis according to one of claims 9 to 12, **characterized in that** the cover door (10) can be locked at the chassis (1).

14. Chassis according to one of the preceding claims, **characterized in that** a second cover element (12) is fixed to the external longitudinal beam section (4).

15. Chassis according to claim 14, **characterized in that** the second cover element (12) is detachably fixed to the external longitudinal beam section (4).

16. Road finishing machine or charger vehicle with a chassis (2) according to one of the preceding claims.

## Revendications

1. Châssis (1) pour un finisseur de route ou un alimentateur, comprenant au moins un premier longeron longitudinal (3), qui s'étend au moins par secteurs, latéralement le long d'un compartiment moteur (7) du finisseur de route ou de l'alimentateur,
châssis dans lequel le longeron longitudinal (3) présente un décrochement en gradin (6), qui subdivise le longeron longitudinal (3) en un tronçon de longeron longitudinal extérieur (4) et un tronçon de longeron longitudinal intérieur (5), le tronçon de longeron longitudinal intérieur (5) formant, en raison du décrochement en gradin (6), une zone d'accueil (9), **caractérisé en ce que** dans la zone d'accueil (9) est logé un premier élément de capot d'habillage (11), et
un côté extérieur (27) du tronçon de longeron longitudinal intérieur (5) est décalé, moyennant le décrochement en gradin (6), par rapport à un côté extérieur (26) du tronçon de longeron longitudinal extérieur (4), en direction du compartiment moteur (7) du finisseur de route ou de l'alimentateur.

2. Châssis selon la revendication 1, **caractérisé en ce que** le décrochement en gradin (6) comprend un tronçon de décrochement en gradin oblique (23) entre le tronçon de longeron longitudinal extérieur et celui intérieur (4, 5).

3. Châssis selon l'une des revendications précédentes, **caractérisé en ce que** le décrochement en gradin (6) est réalisé d'un seul tenant avec le tronçon de longeron longitudinal extérieur et celui intérieur (4, 5).

4. Châssis selon l'une des revendications précédentes, **caractérisé en ce que** le tronçon de longeron longitudinal extérieur et celui intérieur (4, 5) sont soudés l'un à l'autre, pour former le décrochement en gradin (6).

5. Châssis selon l'une des revendications précédentes, **caractérisé en ce que** le premier élément de capot d'habillage (11) est fixé de manière amovible au châssis (1).

6. Châssis selon l'une des revendications précédentes, **caractérisé en ce que** le premier élément de capot d'habillage (11) peut être vissé directement sur le châssis (1).

7. Châssis selon l'une des revendications précédentes, **caractérisé en ce que** le premier élément de capot d'habillage (11) peut être logé dans la zone d'accueil (9) du tronçon de longeron longitudinal intérieur (5) en arrivant au ras du tronçon de longeron longitudinal extérieur (4).

8. Châssis selon l'une des revendications précédentes, **caractérisé en ce que** le premier élément de capot d'habillage (11) présente au moins une ouverture de ventilation (17).

9. Châssis selon l'une des revendications précédentes, **caractérisé en ce que** le premier élément de capot d'habillage (11) est un portillon de capot d'habillage (10).

10. Châssis selon la revendication 9, **caractérisé en ce que** le portillon de capot d'habillage (10) est fixé de manière pivotante au châssis (1).

11. Châssis selon la revendication 9 ou la revendication 10, **caractérisé en ce que** le portillon de capot d'habillage (10) peut être maintenu de manière précontrainte contre le tronçon de longeron longitudinal intérieur (5).

12. Châssis selon l'une des revendications 9 à 11, **caractérisé en ce que** le portillon de capot d'habillage (10) est mobile entre une position ouverte et une position fermée, grâce à un ressort à gaz (28).

13. Châssis selon l'une des revendications 9 à 12, **caractérisé en ce que** le portillon de capot d'habillage (10) peut être verrouillé au châssis (1).

14. Châssis selon l'une des revendications précédentes, **caractérisé en ce que** sur le tronçon de longeron longitudinal extérieur (4) est fixé un deuxième élément de capot d'habillage (12).

15. Châssis selon la revendication 14, **caractérisé en ce que** le deuxième élément de capot d'habillage (12) est fixé de manière amovible au tronçon de longeron longitudinal extérieur (4).

16. Finisseur de route ou alimentateur comprenant un châssis (1) selon l'une des revendications précédentes.
